Europäisches Patentamt

European Patent Office

Office européen des brevets

(19)

(11) Publication number: **0 161 707**
A2

# (12) EUROPEAN PATENT APPLICATION

(21) Application number: **85200623.8**

(22) Date of filing: **23.04.85**

(51) Int. Cl.⁴: **E 04 B 5/46, B 62 B 3/10**

(30) Priority: **15.05.84 NL 8401565**

(43) Date of publication of application: **21.11.85**
**Bulletin 85/47**

(84) Designated Contracting States: **AT BE CH DE FR GB IT LI LU NL SE**

(71) Applicant: **van Beekum, Leendert Johannes, Escamplaan 727, NL-2546 EG The Hague (NL)**

(72) Inventor: **van Beekum, Leendert Johannes, Escamplaan 727, NL-2546 EG The Hague (NL)**

(74) Representative: **Mathol, Heimen et al, EXTERPATENT Willem Witsenplein 4, NL-2596 BK 's-Gravenhage (NL)**

(54) System for covering a field, as well as a unit from the system and a storage cart for parts of a unit.

(57) Demountable system for covering a field, a terrace, an outside staircase or the like surface, consisting of strip-formed units (1), each unit (1) comprising two parallel profile beams (2) cooperating with a number of upwardly arched support ribs (3) said ribs being covered by a mat or foil (4).

0 161 707

## System for covering a field, as well as a unit from the system and a storage cart for parts of a unit.

The invention relates to a demountable system for at least the partial covering of a field by means of strip-formed units positioned next to or near one and other and that are thus able to reduce the atmospheric influences (sun, cold, precipitation) on the covered field. The not on "field" must here be taken in the widest sense and does not only include an arable field, sporting grounds, a terrace or similar surfaces, however, also a hatch coaming of a ship, a drive-way, a man-rope, an outside straircase, etc. In the past suggestions have already been made for the protection of a football field against excessive rain or snow, and by applying a number of elements situated in cross-wise direction over the field. Such suggestions have not been adopted in practice as a result of the complicated and time-consuming manipulations required for the installation of the system and the demounting and storing it afterwards.

**0 161 707**

The invention aims at supplying a system that in terms of cost price remains within usable limits and which enables installation and demounting within a reasonable period of time. These aims are achieved by means of the invention in that every unit has been composed of two parallel profile beams placed at some distance from each other co-operating with a number of upward arched and mutually spaced support ribs, perpendicularly positioned relative to the profile beams and covered by a covering mat of foil.

By the application of a covering mat the relative positions of the support ribs may be changed and the support ribs may be pushed against each other, so that every unit takes up little space in demounted condition, however, covers a large surface in extended condition.

In a favourable embodiment every support rib consists of a lightweight stiff material, with means (e.g. a trolley) at both ends for a sliding co-operation with the profile beam belonging thereto.This aims at enabling extending and moving in respectively of the covering over a large distance, either by hand or possibly by motor.

The covering mat will mainly be stretched in an extended position of the covering system. When sliding the system together the mat must be pleated. In accordance with the invention auxiliary ribs have for this purpose been fastened to the covering mat between each pair of adjacent support ribs, which auxiliary ribs are at both ends connected with a trolley of the adjoining support rib through hinged bars.

The invention also relates to a unit from the system discussed above, comprising two parallel profile beams, a number of support ribs and a covering mat. Preferably every profile beam consists of a number of mutually connected sections, each section forming one whole with a gutter-formed element for the collection and discharge of the catched precipitation. This element or gutter may be made of a hollow synthetic material and the profile beams too may be made of this material, which enables a lightweight construction and which simplifies handling as well as maintenance considerably.

The invention has furthermore been embodied in a section consisting of two profile beams with a length of 5-10m, which beams carry a gutter-formed element at one of the longitudinal sides and at the bottomside rest on two or more legs and have at both ends been provided with the complementary half of a slide coupling, which section is recognizable as intended for application with the above-described system, c.q. unit.

The invention is also embodied in a storage cart for the above-described beam sections and for the covering mat, which has been composed of a skeleton, executed with a mobile underframe, which skeleton has been provided with two profile beams suitable for accomodating the trolleys of a moved-in covering mat.

Such carts can be kept in a shed and be rolled to the field in question when installing the covering system, so that with as less walking as possible the beam sections can be taken out of the cart one by one for the construction of the units, that are subsequently put up against or near each other on the part of the field that is to be protected.

-4-

The invention will be further explained by means of the drawing that shows a number of details of the system for covering a field, as well as a top view of a football field equipped with this system while the storage cart has also been pictured.

Fig. 1 shows a perspective view of a section, composed of two profile beams, a few support ribs and a covering mat.

Fig. 2 is a cross-section at an increased scale according to the line II-II in fig. 1.

Fig. 3 is an enlarged detail from fig. 2 in perspective.

Fig. 4 is a side view of a covering, partly in moved-in and partly in extended position.

Fig. 5 is a top view of a football field equipped with a number of covering units set up near each other.

Figures 6 and 7 show two parts of a storage cart for all parts of the sections.

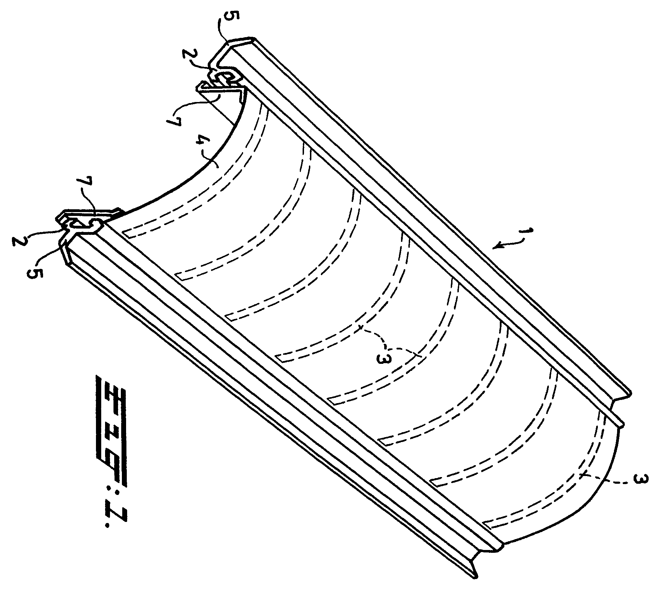

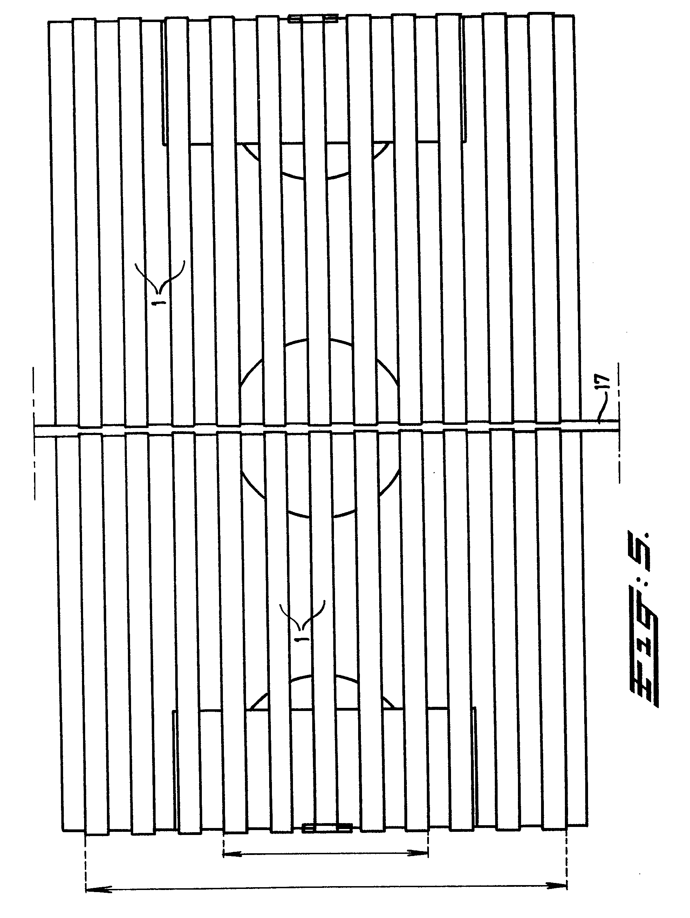

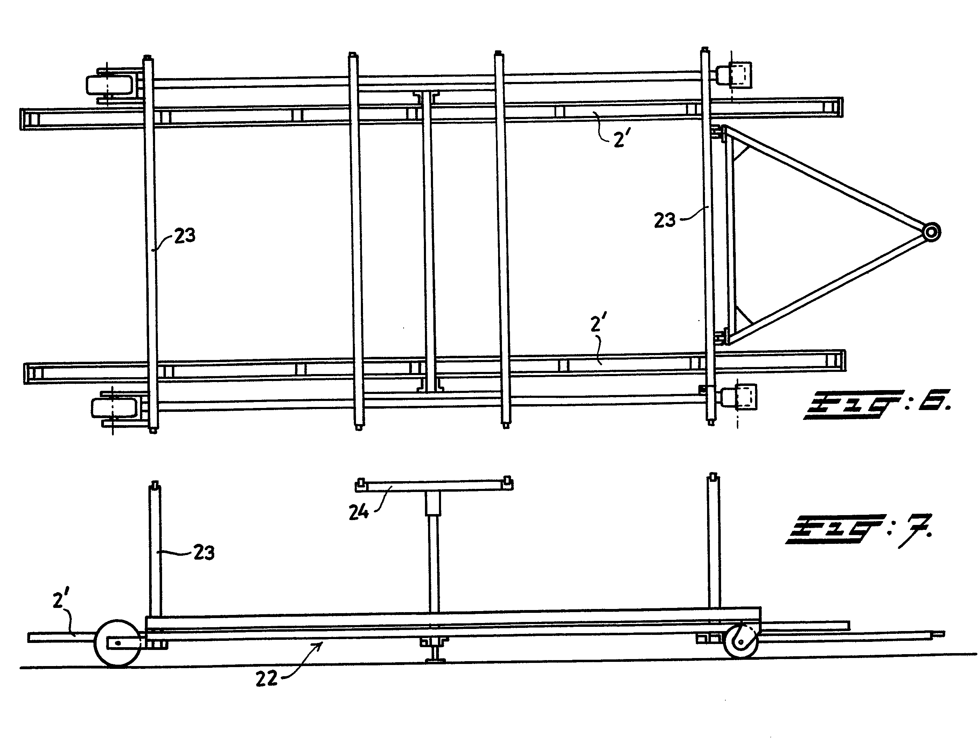

The figures 1 and 5 show most clearly the demountable system consisting of a large number of strip-formed units 1 of which in this special case the length per section is 6.50 metres and the width 2.80 metres. Each section has been composed of two parallel profile beams 2 to be placed in the field at some distance from each other.

These beams are removably connected with each other by means of a number of mutually spaced and mobile frames or support ribs 3 that are upwardly arched. A covering mat of foil 4 is pulled over it. Each profile beam 2 forms one whole with a gutter-formed element 5 for the collection and discharge of the catched precipitation (rain). The covering mat 4, which has for instance a length of 53 metres (half a football field) has a wide hem 6 every two metres, which contains a support rib 3. Each rib has a hat-formed cross-section in order to increase the stiffness.

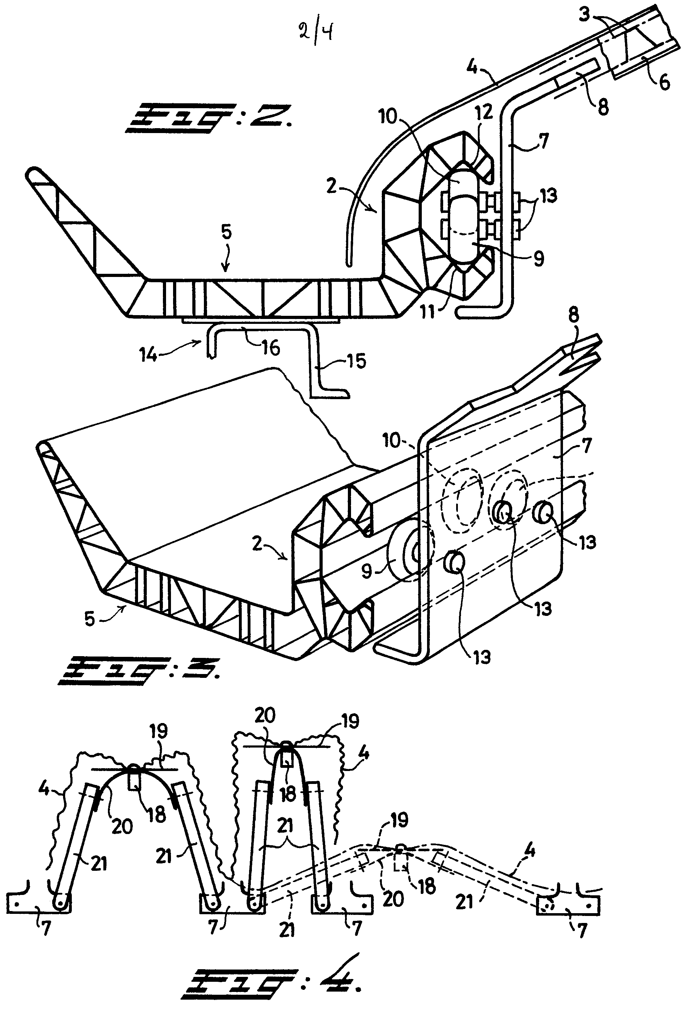

As appears from figures 2 and 3 each support rib 3 consists of a strong and little flexible material (e.g. glassfibre reinforced polyester). At each end is a rectangular plate 7. This plate has a protuberance 8 for the fastening to a support rib 3. Besides there are sliding devices which enable an engagement with the profile beam 2 belonging thereto. These devices consist of two rolling elements 9, 10 that co-operate with the opposite sides of the hollow executed profile beam 2. The rolls 9, 10 are situated on two levels close on top of each other.

Figures 2 and 3 clearly show that each profile beam 2 has been executed with a C-formed cross-section. The lower roll or rolls 9 rest on the bottom 11 of the profile beam 2, while the top rolls 10 are situated against the roof 12 of the profile beam. The supporting axes 13 of these rolls 9, 10 have been fastened in the plate 7. Thus each support beam 3 has at both ends a sort of trolley, formed by the plate 7, and the rolls 9, 10. Instead of with three rolls 9, 10 the trolley may also be equipped with five rolls. In both cases the outer rolls 9 are in touch with the bottom 11 of the profile beam 2.

As appears from fig. 2 each gutter-formed element 5 is connected with a number of support legs 14, the height of these legs being different in view of creating a slight slope of the gutter 5. Each support leg 14 is formed by two feet 15 that are compriced in a brace 16, which has been fastened to the bottomside of the gutter-formed element 5.

As appears from the above, every section 2, 5 of the demountable system has in accordance with the invention a lenght of approximately 6.5 metres and this consists of a gutter-formed element 5 with at a longitudinal side a profile beam 2 and is at the bottomside equipped with two or more support legs 14, see figures 1 and 2. These sections are successively placed on the field to be protected at a mutual distance of approximately 2.80 metres. These section 2, 5 have at the ends been equipped with a complementary half of a (in itself known) slide coupling. A number of (e.g. seven) sections plus the frame from a unit for the covering of half (football) field. Subsequently the support ribs 3 are fitted by sliding the trolleys 7-10 into the long profile beam 2 in such a way that the top rolls 10 prevent the lifting of the ribs and the lower rolls 9 provide a vertical bearing power. The application of these three or five rolls prevent the support ribs 3 from toppling over.

Simultaneously with sliding the support ribs 3, the covering mat 4 is unfurld across the arched ribs 3. The hems 6 of the covering mat 4 in which there is always a rib 3 are meant for this purpose. This brings about a strong and windproof coherence. The edge of the mat 4 hangs above the gutter 5 (see fig. 2). The mat 4 is in this way subsequently pushed over five consecutive profile beams 2, after which a covering strip or unit 1 has been completed, and for instance a situation has been brought about as shown in fig. 5.

The pictured units 1, which are 2.5 to 3 metres in width, extend from the head-ends of the field to the middle of the field. The support legs 14 are therefore the tallest near the ends of the field and reduce to a smallest value in the middle of the field. There the gutters 5 end in a long discharge gutter 17 lying in cross-wise direction on the field.According to fig. 5 only 50% of the field is covered because between the consecutive covering strips or units there is a open space of the same width. It goes without saying that any desired variety can be brought about within the framework of this invention.

As appears from fig.4 an auxiliary rib 18 has been fastened to the covering mat 4 between two consecutive support ribs 3. At the same time a continuous stiff covering strip 19 is fastened between the mat 4 and the auxiliary rib 18 and near the ends of the rib 18 also a flexible lamella 20. By means of these two lamellas 20 every auxiliary rib is at both ends connected through rods 21 with a trolley 7-10 of the adjoining support ribs 3. This brings about that in moved-in position, the covering mat 4 is wavingly pleated. By the presence of the stiff covering strip 19 two adjoining rods 21 will never reach a stretched position.

-8-

In the figures 6 and 7 a storage cart is shown, intented for the covering mat 4 and the oblong beam sections consisting of a gutter-formed element 5, provided with a profile beam 2 and a number of support legs 14. The storage cart consists of a mobile underframe 22 (fig.7) and a skeleton 23 mounted on it (fig.6). This skeleton has been provided with two parallel profile beams 2'. The length is for example 7.50 m and the mutual distance in width is 2.80 m, so that the beams 2' can be connected to a unit 1 set up in the field. On top of the skeleton 23 there is a rack 24 for incorporating loose beam sections, consisting of a profile beam 2, a gutter-formed element 5 and support legs 14.

When storing the various units the trolleys 7-10 are slided along the carrying strips 3 along the profile beams 2' back into the skeleton 23 of the storage cart, the covering mat 4 pleating itself wavingly like a harmonica between each pair of adjoining carrying strips.

In this way the complete covering mat 4 of a unit can be assembled in one storage cart and the complete installation can be installed on the field that is to be protected and be removed afterwards within an acceptable period of time.

Claims:

1.    Demountable system for at least the partial covering of a field by means of strip-formed units positioned next to or near each other and that are thus able to reduce atmospheric influences (sun, cold, or precipitation) on the covered field, characterized in that every unit (1) is composed of two parallel profile beams (2) placed at some distance of each other, co-operating with a number of upward arched and mutually spaced support ribs (3), perpendicularly positioned relative to the beams and covered by a covering mat of foil (4).

2.    System in accordance with claim 1, characterized in that every support rib (3) consists of a lightweight stiff material and in that at both ends there are means (7-10) for a sliding co-operation with the profile beam (2) belonging thereto.

3.    System in accordance with claim 2, characterized in that the movable co-operating means consist of a trolley (7-10), composed of a support plate (7) with a number of sliding or rolling elements (9, 10) that are fitted up in two parallel rows and co-operate with several sides (11, 12) of the C-shaped cross-sectional form of the profile beam (2).

4.    System in accordance with any one of the claims 1-3, characterized in that every support rib (3) is composed of a glassfibre reinforced polyester, and in cross-section has a hat-formed profile and has at both ends been provided with a trolley (7-10).

5. System in accordance with claim 4, characterized in that between each pair of adjæent support ribs (3) an auxiliar rib (18) has been fastened to the covering mat (4), which rib is at both ends connected with a trolley (7-10) of the adjoining support ribs by means of hinged rods (21).

6. Unit from the system in accordance with any one of the claims 1-5, characterized in that every profile beam (2) consists of a number of mutually connected sections, each section forming one whole with a gutter-formed element (5) for the collection and discharge of the catched precipitation.

7. Unit in accordance with claim 6, characterized in that every gutter-formed element (5) is connected with at least two support legs (14), the height of these legs being different in view of a slope of the gutter.

8. Unit in accordance with claim 7, characterized in that every support leg (14) is formed by two feet (15) that are incorporated in a brace (16) which has been fastened to the bottomside of the gutter-formed element (5).

9. Unit in accordance with any one of the claims 6-8, characterized in that every profile beam (2) has been made of a hollow synthetic profile and has been executed with a C-formed, hollow cross-section, the gutter-formed elements (5) also being composed of a hollow synthetic profile.

10. Section from the unit in accordance with any one of the claims 6-9, consisting of two profile beams with a length of 5-10 m, which beams carry a gutter-formed element (5) at one of the longitudinal sides, which at the bottomside rest on two or more legs (14) and has at both ends been provided with the complementary half of a slide coupling, recognizable as intended for application with the system in accordance with any one of the claims 1-5.

11. Covering mat from the system in accordance with any one of the claims 1-5, or from the unit in accordance with any one of the claims 6-9, characterized by a length of a complete unit and provided with a number of narrow hems (1, 6), lying in crosswise direction and at regular intervals from each other, suitable for incorporating a support rib (3).

12. Covering mat in accordance with claim 11, characterized by an auxiliary rib (18) between each pair of adjacent support ribs (3) and by a bended covering strip (19) on each auxiliary rib to limit the sagging of the mat (4) in the extended position of the covering system.

13. Storage cart for the beam sections in accordance with claim 10 and for the covering mat in accordance with the claims 11 or 12, characterized by a skeleton (23) equipped with a mobile underframe (22), which skeleton has been provided with two profile beams (2') suitable for accommodating the trolleys (7-10) of a moved-in covering mat (4).

14. Storage cart in accordance with claim 13, characterized by a rack (24) at the top of the skeleton (23) for supporting beam sections (2) on top of it.

1|4

_FIG:1._

FIG:2.

FIG:3.

FIG:4.

17

FIG. 5

**Fig. 6.**

**Fig. 7.**